# EUROPEAN PATENT APPLICATION

(11) **EP 3 136 394 A1**
(43) Date of publication of application: **01.03.2017**
(21) Application number: 15306309.4
(22) Date of filing: 25.08.2015
(51) Int. Cl.: G11B 27/36, G09B 5/06

(54) **A METHOD FOR SELECTING A LANGUAGE FOR A PLAYBACK OF VIDEO, CORRESPONDING APPARATUS AND NON-TRANSITORY PROGRAM STORAGE DEVICE**

(71) Applicant: Thomson Licensing, 92130 Issy-les-Moulineaux (FR)
(72) Inventor: THUDOR, Franck, 35576 CESSON SEVIGNE (FR); LE BOLZER, Francoise, 35576 CESSON SEVIGNE (FR); DEMOULIN, Vincent, 35576 CESSON SEVIGNE (FR); OISEL, Lionel, 35576 CESSON SEVIGNE (FR)
(74) Representative: Huchet, Anne

(57) **Abstract**

The method comprises receiving, by a reproduction apparatus, a video program including audio carrying at least one language; determining, by the reproduction apparatus, a first number representing a number times a first language used in previous playbacks of the video program; and if the determined first number is greater than a threshold greater than zero, playing back, by the reproduction apparatus, the video program with a second language different from the first language.

## Description

### BACKGROUND OF THE INVENTION

### Field of the Invention

The present invention generally relates to playing back video, and more particularly, to a method that selects a language for a playback of the video.

### Background Information

A conventional video reproduction device, such as a TV receiver, plays back a video program with a default language. Improvements can be made to a conventional video reproduction device to facilitate, for example, language learning during a repeated playback of a video program.

### SUMMARY OF THE INVENTION

In accordance with an aspect of the present disclosure, a method is disclosed. The method comprises receiving, by a reproduction apparatus, a video program including audio carrying at least one language; and playing back, by the reproduction apparatus, the video program with a second language different from a first language according to a number of times the first language was used for playing back the received audio video program.

In one embodiment, the method further comprises determining, by the reproduction apparatus, the number of times the first language was used.

In one embodiment, the video program is played back with the second language different from the first language if the number of times the first language was used is greater than a threshold greater than zero.

In one embodiment, determining the number of times the first language was used comprises retrieving from a memory a record associated with the first language and the video program, and determining a first number as the number of times the first language was used from the record associated with the first language and the video program, wherein if the retrieving fails, the first number is determined to be zero.

In one embodiment, if a record associated with the second language and the video program exists in the memory, from which a second number representing a number of uses of the second language used in previous playbacks of the video program can be determined, the method further comprises updating the record associated with the second language and the video program, so that the determined second number is incremented by one, and if the record associated with the second language and the video program does not exist in the memory, creating the record associated with the second language and the video program in the memory and initializing the record associated with the second language and the video program, so that a number of uses determined from the record is one.

In one embodiment, if the determined first number is less than the threshold, the method further comprises playing back the video program with the first language.

In one embodiment, the method further comprises determining whether a parent control feature is enabled; if the parental control feature is not enabled, playing back the video program with the first language; and if the parental control feature is enabled and if the determined first number is greater than the threshold, playing back the video program with the second language.

In one embodiment, the first number represents a number of times of a scene of the video program the first language was used for playback, wherein playing back the video program with the second language comprises playing back the scene of the video program with the second language and playing back other scenes with the first language.

In accordance with an aspect of the present disclosure, a non-transitory computer readable medium is disclosed. The non-transitory computer readable medium having stored thereon instructions of program code for executing steps of the method according to any embodiment of the method described above, when said program code is executed on a computer.

In accordance with an aspect of the present disclosure, a video reproduction apparatus is disclosed. The video reproduction apparatus comprises memory means for storing numbers of times of languages for playing back a video program; and processing means configured to receive the video program including audio carrying at least one language, wherein the processing means is configured to play back the video program with a second language different from a first language according to a number of times the first language was used for playing back the received audio video program.

In one embodiment, the processing means is configured to determine the number of times the first language was used.

In one embodiment, the video program is played back with the second language different from the first language if the number of times the first language was used is greater than a threshold greater than zero.

In one embodiment, the processing means is configured to determine the number of times the first language was used by retrieving from memory means a record associated with the first language and the video program, and determine the first number as the number of times the first language was used from the record associated with the first language and the video program, wherein if the retrieving fails, the processing means is configured to determine the first number as zero.

In one embodiment, if a record associated with the second language and the video program exists in the memory, from which a second number representing a number of uses of the second language used in previous playbacks of the video program can be determined, the processing means is configured to update the record associated with the second language and the video program, so that the determined second number is incremented by one, and if the record associated with the second language and the video program does not exist in the memory, the processing means is configured to create the record associated with the second language and the video program in the memory and initialize the record associated with the second language and the video program, so that a number of uses determined from the record is one.

In one embodiment, if the determined first number is less than the threshold, the processing means is configured to play back the video program with the first language.

In one embodiment, the processing means is configured to determine whether a parent control feature is enabled; if the parental control feature is not enabled, play back the video program with the first language; and if the parental control feature is enabled and if the determined first number is greater than the threshold, play back the video program with the second language.

In one embodiment, the first number represents a number of times of a scene of the video program the first language was used for playback, wherein the processing means is configured to play back the video program with the second language by playing back the scene of the video program with the second language and playing back other scenes with the first language.

In accordance with an aspect of the present disclosure, a video reproduction apparatus is disclosed. The video reproduction apparatus comprises a memory for storing numbers of times of languages used in for playing back a video program; and a processor configured to receive the video program including audio carrying at least one language, wherein the processor is configured to play back the video program with a second language different from a first language according to a number of times the first language was used for playing back the received audio video program.

In one embodiment, the processor is configured to determine the number of times the first language was used.

In one embodiment, the video program is played back with the second language different from the first language if the number of times the first language was used is greater than a threshold greater than zero.

In one embodiment, the processor is configured to determine the number of times the first language was used by retrieving from the memory a record associated with the first language and the video program, and determine the first number as the number of times the first language was used from the record associated with the first language and the video program, wherein if the retrieving fails, the processor is configured to determine the first number as zero.

In one embodiment, if a record associated with the second language and the video program exists in the memory, from which a second number representing a number of uses of the second language used in previous playbacks of the video program can be determined, the processor is configured to update the record associated with the second language and the video program, so that the determined second number is incremented by one, and if the record associated with the second language and the video program does not exist in the memory, the processor is configured to create the record associated with the second language and the video program in the memory and initialize the record associated with the second language and the video program, so that a number of uses determined from the record is one.

In one embodiment, if the determined first number is less than the threshold, the processor is configured to play back the video program with the first language.

In one embodiment, the processor is configured to determine whether a parent control feature is enabled; if the parental control feature is not enabled, play back the video program with the first language; and if the parental control feature is enabled and if the determined first number is greater than the threshold, play back the video program with the second language.

In one embodiment, the first number represents a number of times of a scene of the video program the first language was used for playback, wherein the processor is configured to play back the video program with the second language by playing back the scene of the video program with the second language and playing back other scenes with the first language.

The aforementioned brief summary of exemplary embodiments of the present invention is merely illustrative of the inventive concepts presented herein, and is not intended to limit the scope of the present invention in any manner.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a block diagram of a relevant portion of a video reproduction apparatus according to an exemplary embodiment of the present invention; and
FIG. 2 is a flowchart illustrating steps for selecting a language for a playback of a video program according to an exemplary embodiment of the present disclosure.

The exemplifications set out herein illustrate preferred embodiments of the invention, and such exemplifications are not to be construed as limiting the scope of the invention in any manner.

### DESCRIPTION OF THE PREFERRED EMBODIMENTS

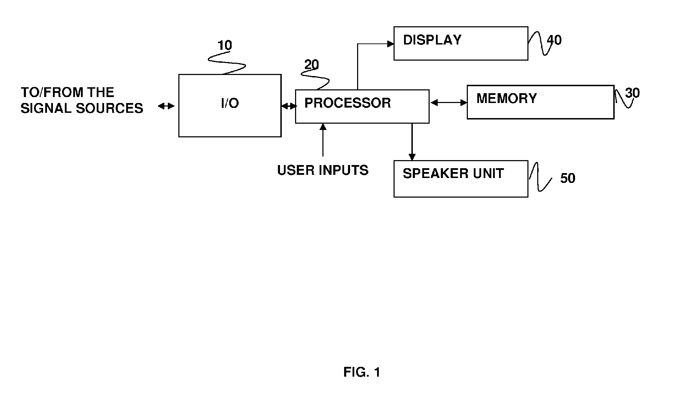

Referring now to the drawings, and more particularly to FIG. 1, a block diagram of a relevant portion of a video reproduction apparatus 100 according to an exemplary embodiment of the present invention is shown. Video reproduction apparatus 100 of FIG. 1 comprises input/output (I/O) means such as I/O block 10, processing means such as processor 20, memory means such as memory 30, display means such as display 40, and audio rendering means such as speaker set 50, which may include at least one speaker. Some of the foregoing elements of video apparatus 100 may be embodied using one or more integrated circuits (ICs). For clarity of description, certain conventional elements associated with video reproduction apparatus 100 such as certain control signals, power signals and/or other elements may not be shown in FIG. 1.

Video reproduction apparatus 100 of FIG. 1 may be embodied as any type of apparatus, device and/or system capable of playing back video images. For example, video reproduction apparatus 100 may be embodied as a television set, a set-top box (STB), digital versatile disk (DVD) player, video game box, personal video recorder (PVR), a cell phone, a laptop, or a tablet, and/or computer that may not include an integrated display device. Accordingly, depending on the embodiment, display 40 may, or may not, be integrated with the other elements of FIG. 1.

Input/output (I/O) block 10 is operative or configured to perform I/O functions of video reproduction apparatus 100. According to an exemplary embodiment, I/O block 10 is operative or configured to receive signals such as audio, video and/or data signals in analog and/or digital format from one or more signal sources such as terrestrial, cable, satellite, internet and/or other signal sources. I/O block 10 is also operative or configured to output processed signals to one or more other devices, and to receive signals from such devices.

Processor 20 may include one or more of processing units, such as microprocessors, digital signal processors, or combination thereof and is operative or configured to perform various signal processing and control functions of video reproduction apparatus 100. According to an exemplary embodiment, processor 20 processes the audio, video and/or data signals provided from I/O block 10 by performing functions including tuning, demodulation, forward error correction, transport processing, and decompressing functions to thereby generate digital data representing audio, video and/or data content. Video data generated by processor 20 may be output for display via display 40.

Processor 20 is also operative or configured to execute software code that enables selecting a language for a playback of a video program according to principles of the present invention. Further details regarding processor 20 and the aforementioned aspect of the present invention will be provided later herein. Processor 20 is also operative or configured to perform and/or enable other functions of video reproduction apparatus 100 including, but not limited to, receiving and processing user inputs, reading and writing data from and to memory 30, and/or other operations.

Memory 30 is operatively coupled to processor 20 and performs data storage functions of video reproduction apparatus 100. According to an exemplary embodiment, memory 30 stores data including, but not limited to, software code, video image file data, user input data, buffered image data, composite image file data, records of languages used in previously playback associated with a video program from which a number of times of a language associated with a video program being used in playback the video program can be determined, and/or other data as referenced herein. Memory 30 may be embodied as any type of data storage device. A part of memory is a non-transitory program storage device readable by the processor 20, tangibly embodying a program of instructions executable by the processor 20 to perform program steps as described herein according to the principles of the embodiments of the invention.

Display 40 is operative or configured to provide visual displays of video data under the control of processor 20. As indicated above, display 40 may or may not be integrated with the other elements of video reproduction apparatus 100. For example, if video reproduction apparatus 100 is embodied as an apparatus/device/system such as a television set, display 40 may be integrated with the other elements of FIG. 1. Conversely, if video reproduction apparatus 100 is embodied as an apparatus/device/system such as a set-top box (STB), display 40 may not be integrated with the other elements of FIG. 1.

Speaker set 50 is operative or configured to provide aural signal of an audio part of the video data under the control of processor 20. Like display 40, the speaker set 50 may or may not be integrated with the other elements of video reproduction apparatus 100. For example, if video reproduction apparatus 100 is embodied as an apparatus/device/system such as a television set, speaker set 50 may be integrated with the other elements of FIG. 1. Conversely, if video reproduction apparatus 100 is embodied as an apparatus/device/system such as a set-top box, speaker set 50 may not be integrated with the other elements of FIG. 1.

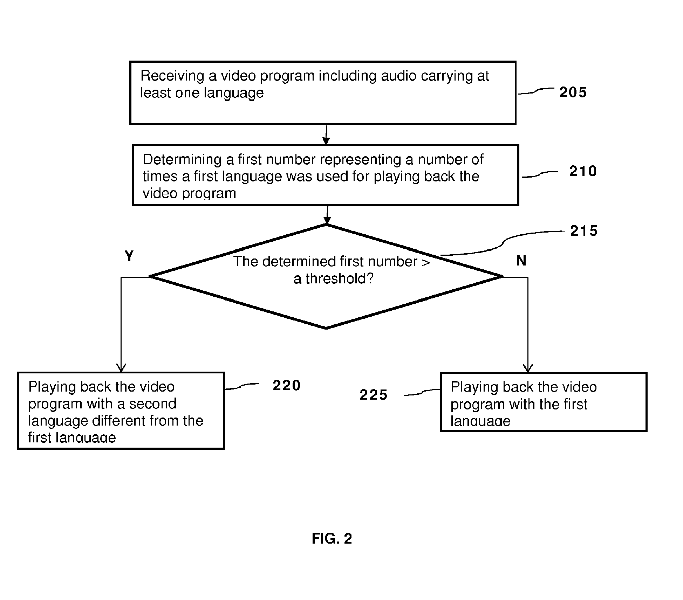

Referring now to FIG. 2, a flowchart 200 illustrating steps for selecting a language for a playback of a video program is shown. At step 205, processor 20 is operative and configured to receive a video program including audio carrying at least one language. The processor 20 may receive the video program from a broadcast source via satellite, terrestrial, or cable. The video program can also be coming from an Internet site, a local drive, a network drive, or other storage devices accessible by video reproduction apparatus 100. The video signal can be in an analog format, such as NTSC or PAL. It can be in a digital format, such as, but not limited to, MPEG-2, MPEG-4, H.264, H.263, HEVC, DVB, DVB-H, ATSC A/53, and ATSC-M/H.

At step 210, the processor 20 is operative or configured to determine a first number representing a number of times a first language was used in playing back the video program. In one embodiment, the processor 20 is operative or configured to determine the first number by retrieving from a memory a record associated with the first number and the video program, and determine the first number from the record associated with the first language and the video program, wherein if the retrieving fails, such as, the record does not exist, the first number is determined to be zero.

In one embodiment, the processor 20 is operative or configured to keep a record associated with a language and a video program in memory 30. When a new language is first use in playing back a particular video program, the processor 20 is operative or configured to determine the number of uses of the new language as zero, create a record or add to an existing record the association of the new language and the particular video program, and initialize the record/association, so that the processor 20 determines from the record that the number of times of the new language was used in playback of the particular program is one. When the new language is used again in another playback of the particular video program, the processor 20 is operative or configured to update the record so that the number determined from the updated record is incremented by one. The record can be just a number indicating the number of times of the new language used in playbacks of the particular video program. In this embodiment, determining the first number comprises retrieving the first number form the memory 30 and if retrieving fails, the processor 20 determines that the first number is zero. In another embodiment, the processor 20 is operative to create two-dimensional table as records, with one dimension indicating video programs and the other, languages, so that with a known language and a known video program, the processor 20 can easily determine the number of use from the table.

In one embodiment, the processor 20 is operative or configured to update the record associated with a language and a video program only if the use of the language is in a consecutive playback. One advantage of this embodiment is that it is more likely for a person to remember the content of the video program after viewing consecutive playbacks.

In order to determine the first number, the processor 20 is operative or configured to identify the received video program. If the video program is digital, the processor 20 can find the identification, such as a title, of the received video program from the metadata associated with the received video program. For example, if the video program is streaming from a server, the processor 20 can load the metadata from the Uniform Resource Locator (URL) of that server. If the received video program is analog, or digital but without metadata, the processor 20 can analyze the video content and recognize the received video program. For example, the processor 20 may characterize the video content, send the characterization to a server through a network link, and receive the identification of the received video content from the server as well known in the art.

After determining the first number (the number of times the first language was used for playing back the video program), the processor 20 can play back the video program with a second language according to the first number. For example, at step 215, the processor 20 is operative or configured to determine if the determined first number is greater than a threshold greater than zero. The threshold, for example, is but not limited to 3.

At step 220, the processor 20 is operative or configured to play back the video program with a second language different from the first language if the determined first number is greater than the threshold.

In one embodiment, if a record associated with the second language and the video program exists in the memory 30, the processor 20 is operative and configured to update the record associated with the second language and the video program, so that the determined second number is incremented by one. If the record associated with the second language and the video program does not exist in the memory 30, the processor 20 is operative or configured to create the record associated with the second language and the video program in the memory 30 and initialize the record associated with the second language and the video program, so that a number of times the second language was used determined from the record is one.

At step 225, the processor 20 is operative or configured to play back the video program with the first language if the determined first number is less than the threshold. In one embodiment, the processor 20 is operative or configured to update the record associated with the first language and the video program, so that the number of times the first language was used is incremented by one.

In one embodiment, a parent can control the threshold through a parent control feature provided by the video reproduction apparatus 100. Changing to a different language, for example, English, after the same language, for example French, has been used for the set number of playbacks of the same video program can help a child learn the different language because the child should have familiarized the video program and is able to understand the content even with a different language. A parent can observe a child's learning behavior and set the threshold accordingly.

In one embodiment, the processor 20 is operative or configured to determine whether a parent control feature is enabled. if the parental control feature is not enabled, the processor 20 is operative or configured to play back the video program with the first language regardless the determined first number; and if the parental control feature is enabled and if the determined first number is greater than the threshold, the processor 20 is operative or configured to play back the video program with the second language.

In one embodiment, a parent can specify a scene in the video program for the purpose of changing to the second language. For example, the video program can be temporally segmented. This segmentation can be proposed as metadata by the service provider, or by analysis of the video program. In one embodiment, analysis can be done locally.

In one example, a shot detection can be done (there exist a lot of shot detectors generally based on variation of the image intensity), and an additional structuration in scenes can also be performed (through a clustering of shots using for example dominant color analysis). When the video program is temporally segmented, the parent can specify a scene by a segment, which can be specified by a time interval counting from the beginning of the video program and the first number represents the number of times the first language was used in playing back that scene. When the first number has exceeded the threshold, the processor 20 is operative or configured to switch the language from the first language to the second language at that specified scene and maintain the first language for other scenes.

In one embodiment, the processor 20 is operative or configured to monitor at least one scene in the video program, maintain a number of times a language was used for each of the at least one scene in the memory 30, and switch to the second language for a scene whose number has exceeded the threshold. The numbers of times a language were use may be different for the different scenes because a child may replay a scene more often than others. In this embodiment, more than one first number is used, each represents a number of times the first language used to play back a different scene and is settable by the parent.

In one embodiment, a parent can specify a character whose language is switched when the number of times a language is used by that character is exceeded the threshold. As a result, the specified character is using the second language while other characters continue to use the first language. The video program can be temporally segmented according to characters. In one embodiment, the metadata includes a list of items, where the number of items is the number of character, each item being itself a list of temporal segments where the character appears. The character segmentations can be done manually by the parent or it can be computed through video analysis, for example, image segmentation, which gives a list of objects and clustering (as the faces in Picasa). It can also be computed through automatic speech detection of the character. Thus, a parent may select a character and the processor 20 is operative or configured to automatically retrieve the temporal segments where this character appears.

In another embodiment, the processor 20 is operative or configured to recognize the viewer and maintain a record for each viewer. The parent in this case can assign different thresholds for different viewers. The processor 20 can recognize a viewer by asking the viewer to log onto an account for example. The video reproduction apparatus 100 may be equipped with a camera and the processor 20 is operative or configured to capture an image of a viewer, compare the captured image with stored images representing different viewers, and recognize the user if there is a match. If there is more than one viewer watching a playback, the processor 20 is operative or configured to select a threshold, which may be the lowest, the highest, the median, or in a random manner.

In one embodiment, the processor 20 is operative or configured to allow a parent to specify the second language.

If the video program is digital, the video program may include more than one audio stream, each carrying a different language. One of the audio streams is used as a default by the processor 20 and the second language is carried by one of the other audio streams. If the specified second language is not included in the received video program, the processor 20 is operative or configured to retrieve an audio carrying the second language from the same or different sources as the video program. In one embodiment, the audio carrying the second language can be downloaded from the same source, for example, the same web site of a service provider that transmits the video program. In another embodiment, the audio carrying the second language may be downloaded from a different source from the source transmitting the video program. For example, the video program received by the video reproduction apparatus 100 is received from a broadcast source for a service provider and the audio carrying the second language is downloaded from a web site sponsored by the service provider. Synchronization between the playback of the video program and the playback of the second language not included in the video program is conventional. For example, a viewer can manually synchronize them. Some examples of metadata based solutions are:
(a) Some timestamps are added to the audio track carrying the second language, as a metadata side track. The processor 20 is operative or configured to read timestamps of audio track and timestamps of the video portion (video track) of the video program and compute a time offset to apply to the audio track to synchronize with the video track.
(b) As a) but only the audio track to synchronize is enriched with such timestamp information, and the processor 20 is operative or configured to use this information to play the audio track carrying the second language at the right moment along with the video program.
(c) Some watermarks are embedded on both audio track carrying the second language and the video track (this time the audio content is modified but no metadata track is needed). The processor 20 is operative or configured to recover those watermarks to perform the synchronization.

Some examples of content based solutions are:
(a) If no enrichment/modification of the audio track carrying the second language is done before the streaming, the processor 20 is operative or configured to extract/match some audio fingerprint from both audio and video tracks to perform synchronization. This solution might be more difficult because it demands to have access to all the data to compute the signatures exhaustively on all the samples and then to perform a matching in real time. The signatures can be precomputed and stored in database (this is similar to Shazam application). Nevertheless, since the audio languages are different the extracted audio features extracted might be difficult to match, leading to an imprecise/bad synchronization.
(b) The synchronization's precision might be higher if each audio track is available as two separated tracks: M+E (music plus effects) and V (voice) tracks. M+E include only music and effects (M+E) and not the voice. In this case the M+E tracks from first streaming and from the queried database will be the same hence easier to synchronize, for example, using the time stamps in the video program and the audio carrying the second language.

The principles of the invention can be applied to replacing the language used in closed caption. For example, if the number of a language used in closed caption in playing back the video program is more than a user defined threshold, the processor 20 is operative or configured to switch the language in closed caption to a different language in a subsequent playback of the video program. In one embodiment, the language used in the closed caption and the language used in the audio are switched at the same time. In this embodiment, the changed language in the closed caption and the changed language in the audio can be the same or different. In another embodiment, the language in the closed caption is changed when the number of times the language was use in playback of the video program is more than a first threshold and the language in the audio is changed when the number of times the language was used in playback of the video program is more than a second threshold different from the first threshold.

Furthermore, although a video program including an audio part is illustrated, the principles of the invention can be applied to an audio program, such as an audio book embodied in a CD/DVD, in which if the number of a language used in playing back the audio program is more than a user defined threshold, the processor 20 is operative or configured switches the language to a different language in a subsequent playback of the audio program.

As described herein, the present invention provides a method that more effectively controls the language used in a playback of a video program. While this invention has been described as having a preferred design, the present invention can be further modified within the scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method comprising:
receiving (205), by a reproduction apparatus, a video program including audio carrying at least one language;
playing back (215, 220), by the reproduction apparatus, the video program with a second language different from a first language according to a number of times the first language was used for playing back the received audio video program.

2. The method according to claim 1, further comprising determining the number of times the first language was used.

3. The method according to one of claims 1 and 2 wherein the video program is played back with the second language different from the first language if the number of times the first language was used is greater than a threshold greater than zero.

4. The method according to one of claims 2 and 3, wherein determining the number of times the first language was used comprises retrieving from a memory a record associated with the first language and the video program, and determining a first number as the number of times the first language was used from the record associated with the first language and the video program, wherein if the retrieving fails, the first number is determined to be zero.

5. The method according to one of claims 2-4, further comprising
determining whether a parent control feature is enabled;
if the parental control feature is not enabled, playing back the video program with the first language; and
if the parental control feature is enabled and if the determined first number is greater than the threshold, playing back the video program with the second language.

6. The method according to any one of claims 1-5, wherein the number of times the first language was used represents a number of times of a scene of the video program the first language was used for playback.

7. The method according to claim 6, wherein playing back the video program with the second language comprises playing back the scene of the video program with the second language and playing back other scenes with the first language.

8. A non-transitory computer readable medium having stored thereon instructions of program code for executing steps of the method according to one of claims 1 to 7, when said program code is executed by a processor.

9. A video reproduction apparatus comprising:
memory means (30) for storing numbers of times of languages used for playing back a video program; and
processing means (20) configured to receive the video program including audio carrying at least one language, wherein the processing means (20) is configured to
play back the video program with a second language different from a first language according to a number of times the first language was used for playing back the received audio video program.

10. The video reproduction apparatus according to claim 9, wherein the processing means (20) is configured to determine the number of times the first language was used.

11. The video reproduction apparatus according to one of claims 9 and 10 wherein the video program is played back with the second language different from the first language if the number of times the first language was used is greater than a threshold greater than zero.

12. The video reproduction apparatus according to one of claims 10 and 11, wherein the processing means (20) is configured to determine the number of times the first language was used by retrieving from the memory means (30) a record associated with the first language and the video program, and determine the first number as the number of times the first language was used from the record associated with the first language and the video program, wherein if the retrieving fails, the processing means (20) is configured to determine the first number as zero.

13. The video reproduction apparatus according to one of claims 10-12, wherein the processing means (20) is configured to determine whether a parent control feature is enabled; if the parental control feature is not enabled, play back the video program with the first language; and if the parental control feature is enabled and if the determined first number is greater than the threshold, play back the video program with the second language.

14. The video reproduction apparatus according to claims 8-13, wherein the number of times the first language was used represents a number of times of a scene of the video program the first language was used for playback.

15. The video reproduction apparatus according to claim 14, wherein the processing means (20) is configured to play back the video program with the second language by playing back the scene of the video program with the second language and playing back other scenes with the first language.
